# EUROPÄISCHE PATENTANMELDUNG

(11) **EP 1 445 534 A1**
(43) Veröffentlichungstag der Anmeldung: **11.08.2004**
(21) Anmeldenummer: 04001403.7
(22) Anmeldetag: 23.01.2004
(51) Int. Cl.: F23D 14/74, F23M 9/06, A01G 9/24

(54) **Anordnung zum Beheizen von Gebäuden, insbesondere von Gewächshäusern**

(30) Priorität: 29.01.2003 DE 10303541; 31.03.2003 DE 10314726
(71) Anmelder: RUHRGAS AKTIENGESELLSCHAFT, 45138 Essen (DE); Kübler GmbH, 67065 Ludwigshafen (DE)
(72) Erfinder: Kruczek, Hans-Jürgen, 46147 Oberhausen (DE); Seifert, Hartmut, 45770 Marl (DE)
(74) Vertreter: Harlacher, Mechthild

(57) **Zusammenfassung**

Die Erfindung betrifft eine Anordnung zum Beheizen von Gebäuden, insbesondere von Gewächshäusern, mit einem Strahlrohr (7), das von mindestens einem Brenner (1) erhitzt wird, dem Verbrennungsluft mittels eines Gebläses (9) und Brennstoff zugeführt wird und wobei der Brenner (1) eine Brennerplatte (2) mit Durchtrittsöffnungen (6) für ein Brennstoff/Verbrennungsluftgemisch aufweist.

Erfindungsgemäß schließt sich an die Brennerplatte (2) eine Brennkammer (3) an, die sich in Strömungsrichtung der Abgase verengt. An die Brennkammer (3) schließt sich ein zylindrisches Ausbrennrohr (4) an, dessen Querschnitt größer ist als das verengte Ende der Brennkammer (3), so dass sich im Strömungsweg der Abgase eine Abrisskante (5) bildet.

Die Abgase einer derartigen Anordnung sind extrem schadstoffarm, so dass die Abgase zur Düngung der Pflanzen verwendet werden können.

## Beschreibung

Die Erfindung betrifft eine Anordnung zum Beheizen von Gebäuden, insbesondere von Gewächshäusern, mit einem Strahlrohr, das von mindestens einem Brenner erhitzt wird, dem Verbrennungsluft mittels eines Gebläses und Brennstoff zugeführt wird, wobei der Brenner eine Brennerplatte mit Durchtrittsöffnungen für ein Brennstoff/Verbrennungsluftgemisch aufweist.

Aus der Praxis sind Anordnungen zum Beheizen von Gewächshäusern bekannt, die mit Erdgas betrieben werden. Die Brenner erhitzen Strahlrohre die in gerader Linienform U-förmig oder mehrfach U-förmig in dem Gewächshaus ausgelegt werden können. Die Strahlrohre können zu einer Einheit bis zu 100 m Länge zusammengeschaltet werden, wobei sich etwa alle 10 m ein Brenner befinden kann.

Bei den Strahlrohren handelt es sich üblicherweise um sogenannte Dunkelstrahler. Die Verbrennung findet in dem geschlossenen Strahlrohr statt, so dass die Flamme nicht sichtbar ist. Der Wärmetransport erfolgt durch elektromagnetische Wellen, d. h. Infrarotstrahlung. Die Oberflächentemperatur ist in der Regel relativ niedrig.

Die Abgase werden ins Freie geführt, weil die Pflanzen sehr empfindlich bereits auf sehr geringe Schadstoffanteile im Abgas reagieren. Es ist grundsätzlich denkbar, die Abgase von erdgasbetriebenen Brennern zur Düngung von Pflanzen zu verwenden, da diese Abgase einen relativ hohen CO₂-Gehalt aufweisen und CO₂ in der Gewächshausluft zur Förderung des Wachstums benötigt wird. Voraussetzung ist allerdings, dass die Schadstoffe im Abgas auf Werte gesenkt werden, die deutlich und dauerhaft unterhalb der in der TA-Luft festgelegten Grenzwerte liegen. Da die bekannten Brenner diese Vorrausetzung nicht erfüllen wird das Abgas ins Freie geführt und den Pflanzen das CO₂ aus Flaschen zugeführt. Das ist entsprechend kostenaufwendig.

Die Aufgabe der Erfindung besteht darin, eine Anordnung der eingangs genannten Art zu schaffen, deren Abgase derart schadstoffarm sind, dass diese zum Düngen der Pflanzen im Gewächshaus verwendet werden können.

Diese Aufgabe wird bei einer Anordnung der eingangs genannten Art durch den kennzeichnenden Teil des Anspruches 1 gelöst.

An die Brennerplatte schließt sich eine Brennkammer an, die sich in Strömungsrichtung der Abgase verengt. Damit wird entgegen der Strömungsrichtung der Abgase ein Widerstand erzeugt, der bewirkt, dass die Flammen nicht abheben bzw. sich von der Brennerplatte lösen.

An die Brennkammer schließt sich ein zylindrisches Ausbrennrohr an, dessen Querschnitt größer ist als das verengte Ende der Brennkammer, so dass sich eine Abrisskante bildet. Diese fördert die Rezirkulation von Abgasen, die somit nachverbrannt werden.

In dem Ausbrennrohr wird die Flamme gehalten und das CO im Abgas kann weitgehend vollständig verbrennen.

Durch die erfindungsgemäße Ausgestaltung wird erreicht, dass die Abgase extrem schadstoffarm sind und daher zum Düngen der Pflanzen in Gewächshäusern genutzt werden können. Der Noₓ-Gehalt (bezogen auf 0 Vol. % O₂) ist kleiner als 20 ppm. Der CO-Wert unterschreitet deutlich den MAK-Wert von 30 ppm.

Vorzugsweise besteht die Brennerplatte aus Keramik und weist eine Vielzahl von Durchtrittsöffnungen auf, die in Reihen angeordnet sind, die gegeneinander versetzt sind.

Bei einer bevorzugten Ausführungsform sind die Durchtrittsöffnungen als Bohrungen ausgebildet, die einen Durchmesser von mindestens 0,90 mm und max. 1,00 mm, vorzugsweise 0,95 mm, aufweisen. Der Abstand von der Mitte einer Bohrung zur Mitte einer benachbarten Bohrung beträgt 1,70 mm bis 2,00 mm vorzugsweise 1,80 mm. Die Einhaltung der Abmessungen bewirkt, dass kleine Flammen entstehen, die sich gegenseitig stützen und daher sehr stabil brennen.

Die Länge des Ausbrennrohres soll aus Kostengründen möglichst gering sein. Ein Optimum hinsichtlich der Kosten und der Abgaswerte wird erreicht, wenn die Länge des Ausbrennrohres etwa das 3fache seines Durchmessers beträgt.

Vorzugsweise beträgt der Querschnitt des Ausbrennrohres das 1,4fache der Fläche der Brennerplatte.

Eine vorteilhafte Ausgestaltung besteht darin, dass sich die Brennkammer unter einem Winkel α verjüngt, der etwa 15 Grad beträgt.

Nach einem vorteilhaften Merkmal der Erfindung weist der Brenner ein Gehäuse auf, das eine Zutrittsöffnung mit einem definierten Durchtrittsquerschnitt für die Verbrennungsluft aufweist. Das Gebläse zur Zufuhr der Verbrennungsluft zum Brenner ist an das Strahlrohr angeschlossen. Auf diese Weise können mehrere Brenner mittels eines einzigen Gebläses mit Verbrennungsluft versorgt werden.

Abweichend davon besteht auch die Möglichkeit, dem Brenner die Verbrennungsluft mittels einer an das Gebläse angeschlossenen Verbrennungsluftleitung zuzuführen. Diese Ausgestaltung bietet die Möglichkeit, die Leistung des Brenners modulierend zu regeln.

Die Erfindung wird im Folgenden anhand eines bevorzugten Ausführungsbeispiels im Zusammenhang mit der Zeichnung näher erläutert.

Die Zeichnung zeigt in
Fig. 1 eine perspektivische Ansicht der wesentlichen Bauteile eines Brenners;
Fig. 2 einen seitlichen Schnitt durch die Bauteile des Brenners nach Fig. 1;
Fig. 3 eine vergrößerte Darstellung der Brennerplatte aus Fig. 1 oder 2;

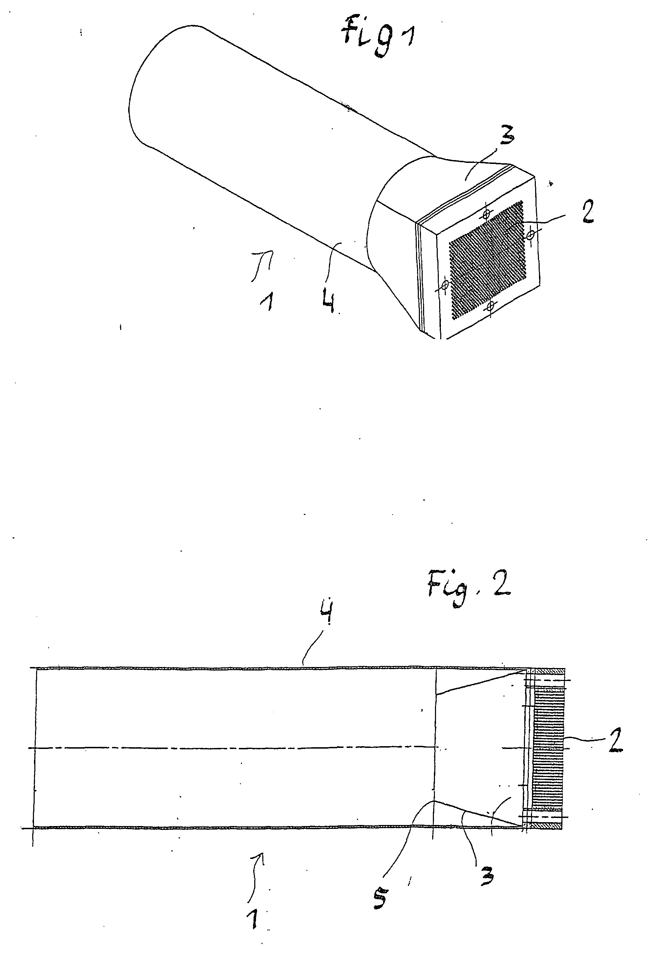

Fig. 1 eine schematische Darstellung der erfindungsgemäßen Anordnung.

In Fig. 1 und 2 ist dargestellt, dass der Brenner 1 eine Brennerplatte 2 aufweist, an die sich eine Brennkammer 3 anschließt, die sich in Strömungsrichtung der Abgase verengt. Die Brennerplatte 2 ist rechteckig, so dass sich die Brennkammer 3 pyramidenförmig verjüngt. An die Brennkammer 3 schließt sich ein zylindrisches Ausbrennrohr 4 an, dessen Querschnitt größer ist als das verengte Ende der Brennkammer 3, so dass sich im Strömungsweg der Abgase eine Abrisskante 5 bildet. Durch die Verengung werden die Abgase rezirkuliert und erneut verbrannt.

Die Länge des Ausbrennrohres 4 beträgt etwa das 3fache seines Durchmessers. Der Querschnitt des Ausbrennrohres 4 beträgt etwa das 1,4fache der Fläche der Brennerplatte 2.

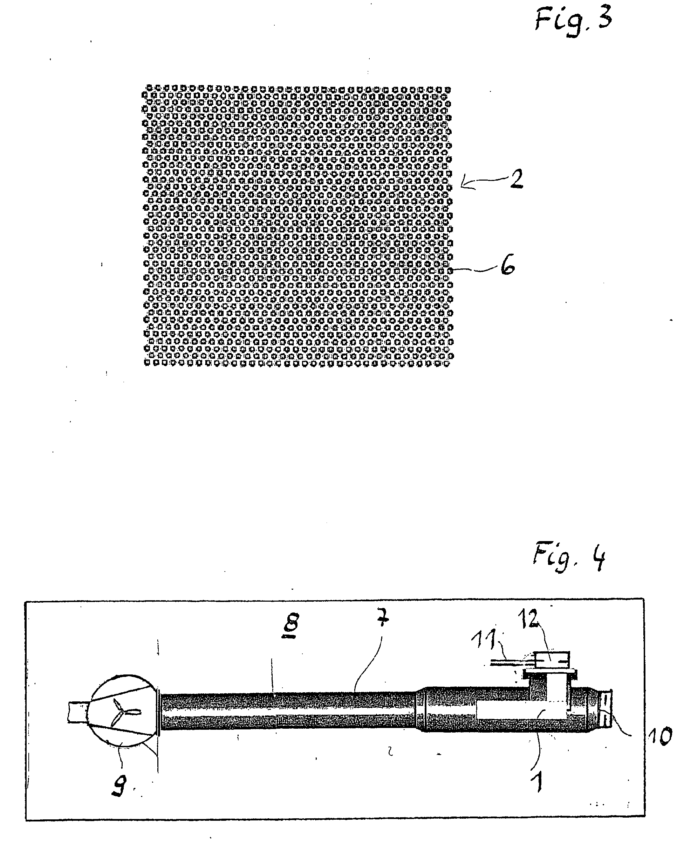

Aus Fig. 3 ist zu entnehmen, dass die Brennerplatte 2 als keramischer Stein ausgebildet ist und eine Vielzahl von Durchtrittsöffnungen 6 aufweist. Die Durchtrittsöffnungen sind Bohrungen, die einen Durchmesser von mindestens 0,90 mm und max. 1,00 mm, vorzugsweise 0,95 mm, haben. Der Abstand von der Mitte einer Bohrung zur Mitte einer benachbarten Bohrung beträgt 1,70 mm bis 2,00 mm vorzugsweise 1,80 mm.

In Fig. 4 ist schematisch ein Teilstück eines Strahlrohres 7 in Form eines Dunkelstrahlrohres in einem Gewächshaus 8 dargestellt. Mehrere Brenner 1, von denen einer dargestellt ist, sind derart in dem Dunkelstrahlrohr 7 angeordnet, dass die Abgase in Achsrichtung durch das Dunkelstrahlrohr 7 strömen. Ein Gebläse 9 ist als Sauggebläse ausgebildet und ist an das abgasseitige Ende des Dunkelstrahlrohres 7 angeschlossen. An dem anderen Ende befindet sich eine mit einer Blende versehene Transportluftöffnung 10. Diese dient zur Förderung des Abgases der Brenner durch das Dunkelstrahlrohr, insbesondere in Anfahrzustand.

Der Brenner 1 ist an eine Gasleitung 11 angeschlossen. Der Brenner weist ein nicht dargestelltes Gehäuse auf, das in bekannter Art und Weise einen Strömungskanal für die Verbrennungsluft bildet und das eine Zutrittsöffnung 12 für die Verbrennungsluft aufweist. Die Zutrittsöffnung 12 ist als Blende mit einem definierten Durchtrittsquerschnitt ausgeführt. Auf diese Weise wird die Menge der Verbrennungsluft bestimmt. Die Verbrennungsluft wird dem Brenner 1 mit Hilfe des Gebläses 9 zugeführt, das das Gas-/Verbrennungsluftgemisch durch die Durchtrittsöffnungen 6 in der Brennerplatte 2 ansaugt. Mit Hilfe des Gebläses 9 wird die Verbrennungsluftzufuhr für alle Brenner ange saugt. Die Abgase der Brenner sind extrem schadstoffarm und werden daher zum Düngen der Pflanzen in das Gewächshaus eingeleitet. Auf die Zuführung von CO₂ aus Flaschen kann verzichtet werden.

Im Rahmen der Erfindung sind ohne weiteres Anwandlungen möglich. So kann die Brennerplatte rund sein. Folglich ist die Brennkammer bei dieser Ausführung konisch geformt. Dem Brenner kann die Verbrennungsluft mittels einer Verbrennungsluftleitung zugeführt wird, die an das Gebläse angeschlossen ist. Dies hat den Vorteil, dass die Leistung des Brenners modulierend geregelt werden kann.

## Patentansprüche

1. Anordnung zum Beheizen von Gebäuden, insbesondere von Gewächshäusern, mit einem Strahlrohr (7), das von mindestens einem Brenner (1) erhitzt wird, dem Verbrennungsluft mittels eines Gebläses (9) und Brennstoff zugeführt wird, wobei der Brenner (1) eine Brennerplatte (2) mit Durchtrittsöffnungen (6) für ein Brennstoff/Verbrennungsluftgemisch aufweist
**dadurch gekennzeichnet,**
**dass** sich an die Brennerplatte (2) eine Brennkammer (3) anschließt, die sich in Strömungsrichtung der Abgase verengt und dass sich an die Brennkammer (3) ein zylindrisches Ausbrennrohr (4) anschließt, dessen Querschnitt größer ist als das verengte Ende der Brennkammer (3), so dass sich im Strömungsweg der Abgase eine Abrisskante (5) bildet.

2. Anordnung nach Anspruch 1,
**dadurch gekennzeichnet, dass** die Brennerplatte (2) aus Keramik besteht und eine Vielzahl Durchtrittsöffnungen (6) aufweist, die in Reihen angeordnet sind, die gegeneinander versetzt sind.

3. Anordnung nach Anspruch 1 oder 2,
**dadurch gekennzeichnet, dass** die Durchtrittsöffnungen (6) als Bohrungen ausgebildet sind, die einen Durchmesser von mindestens 0,90 mm und max. 1,00 mm, vorzugsweise 0,95 mm, aufweisen und dass der Mittelabstand der Bohrungen 1,70 mm bis 2,00 mm vorzugsweise 1,80 mm beträgt.

4. Anordnung nach einem der Ansprüche 1 bis 3,
**dadurch gekennzeichnet, dass** die Länge des Ausbrennrohres (4) etwa das 3fache seines Durchmessers beträgt.

5. Anordnung nach einem der Ansprüche 1 bis 4,
**dadurch gekennzeichnet**, das der Querschnitt des Ausbrennrohres (4) etwa das 1,4fache der Fläche der Brennerplatte (2) beträgt.

6. Anordnung nach einem der Ansprüche 1 bis 5,
**dadurch gekennzeichnet, dass** sich die Brennkammer (3) unter einem Winkel α verjüngt, der etwa 15 Grad beträgt.

7. Anordnung nach einem der Ansprüche 1 bis 6,
**dadurch gekennzeichnet, dass** der Brenner (1) ein Gehäuse aufweist, das eine Zutrittsöffnung (12) mit einem definierten Durchtrittsquerschnitt für die Verbrennungsluft aufweist und dass das Gebläse (9) zur Zufuhr der Verbrennungsluft zum Brenner (1) an das Strahlrohr angeschlossen ist.

8. Anordnung nach einem der Ansprüche 1 bis 6,
**dadurch gekennzeichnet, dass** dem Brenner (1) die Verbrennungsluft mittels einer an das Gebläse angeschlossenen Verbrennungsluftleitung zugeführt wird.
